# EUROPÄISCHE PATENTSCHRIFT

(11) **EP 4 127 463 B1**
(45) Veröffentlichungstag und Bekanntmachung des Hinweises auf die Patenterteilung: **13.03.2024**
(21) Anmeldenummer: 21721860.1
(22) Anmeldetag: 14.04.2021
(51) Int. Cl.: F03D 13/20, F03D 80/80, F03D 9/25

(54) **ENERGIEÜBERTRAGUNG IN EINER WINDKRAFTANLAGE**
ENERGY TRANSFER IN A WIND TURBINE
TRANSFERT D'ÉNERGIE DANS UNE ÉOLIENNE

(30) Priorität: 20.05.2020 EP 20175717
(43) Veröffentlichungstag der Anmeldung: 08.02.2023
(73) Patentinhaber: Innomotics GmbH, 90441 Nürnberg (DE)
(72) Erfinder: SCHWIMMBECK, Franz, 94099 Ruhstorf (DE)
(74) Vertreter: Siemens Patent Attorneys
(86) Internationale Anmeldenummer: PCT/EP2021/059635
(87) Internationale Veröffentlichungsnummer: WO 2021/233610

(56) Entgegenhaltungen:
- EP-A2- 2 471 153
- EP-B1- 2 471 153
- DE-A1-102009 050 378
- DE-A1-102011 003 208
- US-A1- 2005 230 980

## Beschreibung

Die Erfindung betrifft eine Windkraftanlage, aufweisend einen Generator, einen Transformator, eine Energieübertragungsvorrichtung, einen Netzanschlusspunkt und einen Turmaufbau, wobei sich die Energieübertragungsvorrichtung von der Gondel zum Fuß der Windkraftanlage erstreckt und den Generator elektrisch über den Transformator mit dem Netzanschlusspunkt verbindet. Ferner betrifft die Erfindung ein Verfahren zum Betreiben einer derartigen Windkraftanlage.

Bei Windkraftanlagen muss die elektrische Energie vom Generator ins Stromnetz transportiert werden, das am Fuß des Turmaufbaus als Netzanschlusspunkt verfügbar ist. Da der Generator immer oben in der Gondel angeordnet ist, ist also eine Energieübertragungsvorrichtung von der Gondel zum Boden der Windkraftanlage, auch als Fuß der Windkraftanlage bezeichnet, erforderlich. Diese Energieübertragungsvorrichtung wird dabei meist durch mehrere Kabel gebildet, welche eine elektrische Verbindung für eine Energieübertragung mit Wechselspannung oder Gleichspannung darstellen. Diese Verbindung muss auf die volle Leistung ausgelegt sein, was entsprechende Kabelquerschnitte nötig macht. Dabei sind Kabellängen von über 100 m aufgrund der Höhe der Windkraftanlagen keine Seltenheit in modernen Windkraftanlagen.

Die übliche Arbeitsspannung der Generatoren liegt im Bereich der Niederspannung, also unterhalb 1000V, und beträgt typischerweise 690V. Die übliche Netzspannung für die Verbindung am Netzanschlusspunkt ist eine Mittelspannung von über 1kV und beträgt typischerweise 20kV.

Der Weg der Energie vom Generator in das Energieversorgungsnetz erfolgt üblicherweise über einen Frequenzumrichter, Kabel von der Gondel zum Fuß der Windkraftanlage und einem Transformator. Dabei können Transformator und Frequenzumrichter oben in der Gondel oder am Fuß der Windkraftanlage angeordnet sein. Dokument DE102011003208 A1 zeigt ein Beispiel aus dem Stand der Technik.

Der Erfindung liegt die Aufgabe zugrunde, die Energieübertragung zwischen der Gondel und dem Fuß der Windkraftanlage zu verbessern.

Diese Aufgabe wird durch eine Windkraftanlage, nach Anspruch 1, aufweisend einen Generator, einen Transformator, eine Energieübertragungsvorrichtung zur Übertragung einer vom Generator erzeugten elektrischen Energie, einen Netzanschlusspunkt und einen Turmaufbau gelöst, wobei sich die Energieübertragungsvorrichtung von der Gondel zum Fuß der Windkraftanlage erstreckt und den Generator elektrisch über den Transformator mit dem Netzanschlusspunkt verbindet, wobei die Energieübertragungsvorrichtung als einen ersten Leiter eine Metallkonstruktion des Turmaufbaus umfasst, wobei die Metallkonstruktion zumindest abschnittsweise als eine elektrisch leitende Verbindung von der Gondel zum Fuß der Windkraftanlage ausgebildet ist, wobei der Transformator am Fuß der Windkraftanlage angeordnet ist, wobei der Transformator die Energieübertragungsvorrichtung und den Netzanschlusspunkt elektrisch leitend und galvanisch getrennt miteinander verbindet, wobei die Metallkonstruktion mit einem vorgegebenen Bezugspotential, insbesondere mit dem Erdpotential, elektrisch leitend verbunden ist. Ferner wird diese Aufgabe durch ein Verfahren zum Betreiben einer derartigen Windkraftanlage gelöst, nach Anspruch 7, wobei ein Strom zum Übertragen von durch den Generator erzeugter elektrischer Energie von der Gondel zum Fuß der Windkraftanlage zumindest abschnittsweise und oder teilweise durch die Metallkonstruktion des Turmaufbaus geleitet wird.

Weitere vorteilhafte Ausgestaltungen der Erfindung sind in den abhängigen Ansprüchen angegeben.

Der Erfindung liegt die Erkenntnis zugrunde, dass sich der Aufwand an elektrischen Leitern, wie Stromschienen und/oder Kabeln, von der Gondel zum Fuß der Windkraftanlage dadurch deutlich verringern lässt, dass der Strom zumindest abschnittsweise und/oder teilweise über eine Metallkonstruktion des Turmaufbaus geführt wird. Dabei wird für eine Phase eines Drehstromnetzes oder für ein Potential eines Gleichspannungsnetzes die Metallkonstruktion des Turms für die Energieübertragung, d.h. das Leiten des Stromes, genutzt.

Die Energieübertragungsvorrichtung ist dabei zur Übertragung der vom Generator erzeugten elektrischen Leistung an den Netzanschlusspunkt vorgesehen.

Das Metall der Metallkonstruktion stellt einen guten elektrischen Leiter dar. Es wird in unterschiedlicher Form für den Turmaufbau und dessen Konstruktion verwendet. Beispielsweise kommt Metall in Form eines Stahlgitterturms zum Einsatz. Bei dem Stahlgitterturm ist nahezu der gesamte Turm eine Gitterkonstruktion aus Stahl, also einem Werkstoff, der Eisen als Metall aufweist. Dieses Metall, beispielsweise im Eisen oder Stahl, kann für das Leiten des Stroms auf einfache Weise genutzt werden. Es stellt mit einer elektrischen Leitfähigkeit von typischerweise mehr als 10⁶ S/m einen guten elektrischen Leiter dar. Mit anderen Worten ist die Metallkonstruktion des Stahlgitterturms mit einer elektrischen Leitfähigkeit von mehr als 10⁶ S/m sowohl für die konstruktiven und mechanischen Eigenschaften sowie gleichzeitig für die Energieübertragungsvorrichtung besonders vorteilhaft geeignet, um die Energie verlustarm zu übertragen. Ebenso kann eine Bewehrung aus einem leitenden Material wie beispielsweise Metall oder Eisen, innerhalb eines Betonturms für das Leiten des elektrischen Stroms verwendet werden. Auch die Bewehrung stellt mit einer elektrischen Leitfähigkeit von typischerweise mehr als 10⁶ S/m einem guten elektrischen Leiter dar. Mit anderen Worten ist die Metallkonstruktion der Bewehrung des Stahlbetonturms mit einer elektrischen Leitfähigkeit von mehr als 10⁶ S/m sowohl für die konstruktiven und mechanischen Eigenschaften sowie gleichzeitig für die Energieübertragungsvorrichtung besonders vorteilhaft geeignet, um die Energie verlustarm zu übertragen.

Die Übertragung des Stroms erfolgt dabei über mehrere Leiter, die üblicherweise als Kabel ausgebildet sind. Dabei werden für die Übertragung der elektrischen Energie mittels eines Drehstromnetzes mindestens drei Leiter benötigt, für die Übertragung mittels einer Gleichspannung mindestens zwei Leiter benötigt. Durch das Nutzen der Metallkonstruktion für das Leiten des Stroms als ersten Leiter kann auf die Verwendung eines oder mehrerer elektrisch paralleler Kabel für diesen Leiter verzichtet werden. Alternativ ist es neben dem Verzicht auf Kabel für diesen Leiter auch möglich, den Querschnitt der Kabel zu verringern indem eine geringere Anzahl an parallelen Kabeln und/oder Kabel mit geringerem Querschnitt und/oder Kabel mit einer geringeren Stromtragfähigkeit verwendet werden. Mit anderen Worten ist es möglich, entweder den gesamten Strom des ersten Leiters, also einer der Phasen und eines Gleichspannungspotentials, durch die Metallkonstruktion zu führen oder alternativ zumindest teilweise diesen Strom durch die Metallkonstruktion zu übertragen, während der restliche Anteil des Stroms über Kabel mit einem geringeren Leitungsquerschnitt und/oder geringeren Leitfähigkeit verlustarm transportiert werden kann.

Dabei kann die gesamte Strecke von der Gondel bis zum Fuß durch das Metall der Metallkonstruktion zurückgelegt werden. Alternativ ist es auch möglich, dass der Strom abschnittsweise, d.h. über einen oder mehrere Teilabschnitte von der Gondel zum Fuß der Windkraftanlage, durch die Metallkonstruktion des Turmaufbaus geführt wird. Diese Abschnitte untereinander können dann wieder mittels einer Stromschiene oder eines Kabels miteinander verbunden sein. Gerade wenn die Bewehrung eines Betonturms für das Leiten des Stroms ausgenutzt wird, ist die Länge eines Bewehrungsstabs meist deutlich kürzer als der gesamte Turm. Dies liegt beispielsweise darin begründet, dass der gesamte Turmaufbau durch eine Vielzahl von einzelnen, bereits vorgefertigten Turmelementen, auch als Betonelemente bezeichnet, gebildet wird, die dann zum Errichten des Turms übereinander angeordnet werden. So ist es zum Beispiel möglich, die beiden Enden des Bewehrungsstabs oder eines Bewehrungsgitters aus der Betonummantelung herausstehend, vorzugsweise in das Innere des Turmaufbaus herausstehend, anzuordnen, so dass von einem Bewehrungsstab zum nächsten im Innern des Turmes eine leitende Verbindung, beispielsweise mittels eines Kabels oder einer Stromschiene, geschaffen werden kann. Alternativ oder ergänzend ist es möglich, mit einem Anschluss aus Metall den Bewehrungsstab oder das Bewehrungsgitter vorzugsweise im Innern der Betonummantelung elektrisch zu kontaktieren. Bei der Ausbildung des Betonturms durch eine Vielzahl von Betonelementen wird das Metall des Turmaufbaus abschnittsweise für die Energieübertragung im Turmaufbau genutzt.

Somit lassen sich durch das Nutzen der Metallkonstruktion für die Energieübertragung Kabel einsparen oder zumindest für deutlich geringere Ströme dimensionieren.

Wenn die Metallkonstruktion für das Leiten des Stroms genutzt werden soll, muss eine Gefährdung durch die anliegende Spannung an der Metallkonstruktion sicher ausgeschlossen sein. Dies kann beispielsweise durch Aufbringen einer Isolation geschehen.

Alternativ und deutlich einfacher kann dies auch dadurch geschehen, dass der Berührschutz mittels Erdung oder Sicherstellung von einer geringen Berührspannung geschieht. Mit Hilfe des Transformators, der am Fuße des Turmaufbaus angeordnet ist, ist die Energieübertragungsvorrichtung galvanisch vom Netzanschlusspunkt und damit auch vom verbundenen Energieversorgungsnetz getrennt. Es lässt sich also für die Energieübertragungsvorrichtung ein Bezugspotential frei festlegen. Dieses wird so gewählt, dass das Potential der Metallkonstruktion eine zulässige Berührspannung nicht überschreitet. Im Falle eine Gleichspannung sind dies typischerweise 120V, im Falle einer Wechselspannung von 50Hz oder 60Hz sind dies typischerweise 60V. Als besonders vorteilhaft hat es sich dabei erwiesen, das Potential der Metallkonstruktion auf das Erdpotential zu legen, indem man die Metallkonstruktion erdet. Damit ist auf einfache Weise der Berührschutz sichergestellt, ohne dass eine entsprechend anliegendes Bezugspotential überwacht werden muss. Die übrigen Leiter können dann isolationstechnisch auf die Leiter-Leiter Spannung ausgelegt werden.

Der Transformator wird dabei zur galvanischen Trennung am Fuß des Turmaufbaus angeordnet, damit ein Bezugspotential für die Energieübertragungsvorrichtung unabhängig vom Bezugspotential des Energieversorgungsnetzes festgelegt werden kann. Bei einer Anordnung von Transformator am Fuß der Windkraftanlage ist die Konstruktion des Turmaufbaus deutlich einfacher, da das Hohe Gewicht des Transformators am Fuß die Turmkonstruktion wesentlich einfacher angeordnet werden kann als bei einer Unterbringung des Transformators in der Gondel. Somit ergibt sich der synergetische Effekt bei einer Unterbringung des Transformators am Fuß der Windkraftanlage, dass sowohl das hohe Gewicht des Transformators besonders günstig am Fuß der Windkraftanlage angeordnet ist als auch gleichzeitig eine freie Wahl des Bezugspotential für die Energieübertragungsvorrichtung vorgebbar ist, um die Berührsicherheit der Windkraftanlage sicherzustellen. Besonders für den Fall eines Betonturms können die Verbindungen der einzelnen Betonelemente mit einer nicht isolierten Stromschiene vorgenommen werden, weil die Berührsicherheit über die Vorgabe des Bezugspotentials mit hinreichend niedriger Berührspannung, insbesondere mittels der Erdung, sichergestellt ist. Denn das Heben des Transformators bei der Montage und/oder Inbetriebnahme in die Gondel wäre sehr aufwendig und kostspielig, da auch das Hohe Gewicht in der Gondel teure konstruktive Maßnahmen erforderlich macht. Ebenso ist ein Tausch bei einem Defekt deutlich teurer, wenn er in der Gondel angeordnet ist. Zudem ist es mit der Anordnung des Transformators am Fuß des Turmaufbaus ebenfalls möglich, einen Frequenzumrichter zur Regelung des Energieflusses der Windkraftanlage am Fuß des Turmaufbaus anzuordnen. Diese Anordnung erleichtert neben einer einfacheren Konstruktion des Turmaufbaus und einer einfacheren Installation des Frequenzumrichters auch die Wartung der Windkraftanlage.

Zwar hat die Anordnung des Transformators am Fuß des Turmaufbaus den Nachteil einer im Vergleich zur Netzspannung des Energieversorgungsnetzes geringen Spannung und damit verbundenen hohen Strömen im Energieübertragungssystems. Dieser Nachteil äußert sich in größeren Kabelquerschnitten für eine benötigte höhere Stromtragfähigkeit der Kabel. Durch das Leiten des Stroms durch die Metallkonstruktion und der damit einhergehenden Einsparung an Kabeln/Stromschienen wird dieser Nachteil jedoch mehr als kompensiert.

Eine galvanisch getrennte Verbindung wird oftmals auch als galvanisch isoliert bezeichnet.

Bei einer vorteilhaften Ausgestaltung der Erfindung wird die Metallkonstruktion des Turmaufbaus zumindest teilweise durch einen Stahlgitterturm gebildet. Bei einem Stahlgitterturm existiert eine elektrisch leitende Verbindung von der Gondel bis zum Fuß des Turmaufbaus, der für das Leiten eines Stroms einer Phase eines Drehspannungssystems oder eines Potentials einer Gleichspannung genutzt werden kann. Dazu sind keine oder zumindest nahezu keine baulichen Veränderungen an der Stahlgitterkonstruktion vorzunehmen. Durch das Festlegen des Potentials der Metallkonstruktion auf eine gegenüber dem Erdpotential ungefährlichen Spannung ist auch der Betrieb aus sicherheitstechnischer Sicht einfach möglich. Besonders vorteilhaft ist es dabei, das Potential des Stahlgitterturms zu erden und somit den Berührschutz auf besonders einfache Weise sicherzustellen.

Dabei kann der gesamte Turm als Stahlgitterturm ausgeführt sein oder auch nur Teile, so dass zumindest abschnittsweise der Strom von der Gondel zum Fuß des Turmaufbaus durch die Metallkonstruktion geführt wird.

Die verwendeten Querschnitte der Metallkonstruktion sowie die gute Kühlungseigenschaften durch die Luft der offenen Bauweise ermöglichen es, den gesamten Strom des Leiters, d.h. des ersten Leiters, durch die Metallkonstruktion fließen zu lassen und auf weitere elektrisch parallel angeordnete Kabel oder Stromschienen zu verzichten. Auch kann der gesamte Strompfad von der Gondel bis zum Fuß des Turmaufbaus vollständig und nicht nur abschnittsweise auf einfache Weise durch die Metallkonstruktion realisiert werden, da der gesamte Stahlgitterturm mit einer Stromleitfähigkeit von mehr als 10⁶ S/m eine gut leitende Verbindung darstellt. Selbst bei einer Stromleitfähigkeit der Metallkonstruktion des Stahlgitterturms von nur mehr als 10³ S/m ist aufgrund der großen Querschnittsfläche ein wirtschaftlicher und verlustarmer Betrieb möglich.

Ein besonderer Vorteil besteht darin, dass die Metallkonstruktion nicht nur der mechanischen Stabilität des Turmes dient, sondern gleichzeitig Teile der Funktion der Energieübertragung übernimmt, ohne dass die Ausführung der Metallkonstruktion aufwendiger wird.

Bei einer weiteren vorteilhaften Ausgestaltung der Erfindung ist der Turmaufbau zumindest teilweise als ein Betonturm ausgebildet, wobei die Metallkonstruktion des Turmaufbaus zumindest abschnittsweise durch eine Bewehrung oder Teile der Bewehrung des Betonturmes gebildet wird. Die Bewehrung kann dabei beispielsweise als ein Bewehrungsgitter oder als Bewehrungsstäbe ausgebildet sein. Bei einem Turm aus Beton wird zur Erreichung notwendiger Zugfestigkeit eine Bewehrung eingesetzt. Diese kann auch für das Leiten des Stroms für die Energieübertragung von der Gondel zum Fuß des Turmaufbaus genutzt werden. Dabei kann durch die Bewehrung eine durchgehende elektrische Verbindung von der Gondel zum Fuß des Turmaufbaus geschaffen werden, oder die Bewehrung wird abschnittsweise genutzt. Beispielsweise innerhalb eines Turmelements wird der Strom durch das Metall der Betonkonstruktion geführt und dann aus dem Beton, vorzugsweise mittels eines Anschlusses in das Innere des Turms herausgeführt. Dort wird dann mit Kabeln oder Stromschienen eine Verbindung zum nächsten Turmelement und der dortigen Bewehrung geschaffen.

Im Gegensatz zu einer Stahlgitterkonstruktion befinden sich in einem Betonturm parallel mehrere Bewehrungsstränge, die elektrisch voneinander isoliert sind. Diese können elektrisch an unterschiedlichen Höhen des Turmes, beispielsweise durch leitfähige Ringe, insbesondere Metallringe, am Übergang zwischen Betonelementen, parallelgeschaltet werden, um so eine gute Leitfähigkeit durch die Bewehrung zu realisieren. Damit ist der elektrische Widerstand und die damit einhergehenden Verluste und Erwärmung im Beton derart gering, dass die Metallkonstruktion für das Leiten auch von hohen Strömen von über 1000A genutzt werden kann. Da der Beton keine hinreichende Isolationseigenschaften besitzt, sorgt auch hier das Festlegen eines geeigneten Bezugspotentials zur Vermeidung von gefährlichen Berührspannungen für einen sicheren Betrieb der Windkraftanlage. Besonders vorteilhaft ist es auch bei einem Betonturm, die Metallkonstruktion mit dem Erdpotential zu verbinden, da auf diese Weise besonders einfach und zuverlässig der Berührschutz realisiert werden kann.

Damit übernimmt die Bewehrung nicht nur die Funktion einer mechanischen Stabilität des Turmaufbaus, sondern ermöglicht gleichzeitig, den Strom und damit elektrische Energie durch den Turm zu leiten und teure Kabelverbindungen oder Stromschienen einzusparen. Damit ergibt sich ein synergetischer Effekt.

Bei einer weiteren vorteilhaften Ausgestaltung der Erfindung beträgt die Höhe des Turmaufbaus mindestens 100m. Je größer der Turm ist, desto länger sind die Kabel, die verlegt werden müssen, um die elektrische Energie aus der Gondel zum Netzanschlusspunkt am Fuß des Turmaufbaus zu übertragen. Durch die Höhe des Turms gilt es darüber hinaus, nach Möglichkeit die Anbringung von Komponenten wie beispielsweise des Transformators in der Gondel zu vermeiden, da diese die Konstruktion des Turmaufbaus sowie die Montage der Windkraftanlage überproportional teuer werden lassen. Gleichzeitig wächst der Bedarf an einer effizienten Energieübertragung von der Gondel zum Fuß der Windkraftanlage. Bei einer Windkraftanlage mit einer Höhe von über 100m können durch die vorgeschlagene Anordnung deutlich Kosten für die Verkabelung bzw. für die Turmkonstruktion sowie für die Montage eingespart werden.

Bei einer weiteren vorteilhaften Ausgestaltung der Erfindung ist die Energieübertragungsvorrichtung für den Betrieb mit einer Spannung im Niederspannungsbereich, insbesondere mit einer Nennspannung von 690V, eingerichtet. Der Niederspannungsbereich, insbesondere mit einer Nennspannung von 690V erlaubt eine kostengünstige Fertigung des Generators unter anderem in Hinblick auf Leistungsfähigkeit, Gewicht und Baugröße. Durch die Nutzung der Metallkonstruktion können selbst bei dieser Spannung entstehende Ströme kostengünstig in Bezug auf benötigte Kabel und elektrische Verluste innerhalb des Turmaufbaus, d.h. durch die Metallkonstruktion, übertragen werden. Durch die Nutzung der Metallkonstruktion kann bei einem Drehstromsystem ein Drittel der Kabel eingespart werden, ohne dass sich hierdurch nennenswerte Nachteile ergeben. Mit der Wahl dieser Spannungsebene im Niederspannungsbereich kann das Gesamtsystem der Windkraftanlage mit ihren Komponenten Generator und Energieübertragung besonders kostengünstig und zuverlässig realisiert werden.

Bei einer weiteren vorteilhaften Ausgestaltung der Erfindung ist zwischen Generator und der Energieübertragungsvorrichtung ein Gleichrichter angeordnet, wobei zwischen der Energieübertragungsvorrichtung und dem Transformator ein Wechselrichter angeordnet ist, wobei die Energieübertragungsvorrichtung für den Betrieb mit einer Gleichspannung, insbesondere im Spannungsbereich von 800V bis 1500V, eingerichtet ist. Bei dieser Anordnung wird ein Frequenzumrichter zur Steuerung oder Regelung der Anlage verteilt in der Gondel und am Fuß des Turmaufbaus angeordnet. Der Gleichrichter und der Wechselrichter sind Komponenten des Frequenzumrichters. Die Begriffe Gleichrichter und Wechselrichter beziehen sich auf eine Energieflussrichtung von Generator zum Energieversorgungsnetz.

Mit dieser Anordnung wird ein Gleichrichter zur Gleichrichtung des Wechselstroms in einen Gleichstrom in der Gondel benötigt. Dieser Gleichrichter sollte vorzugsweise ein steuerbarer Gleichrichter sein, um das Verhalten der Windkraftanlage steuern oder regeln zu können. Die Energieübertragung erfolgt dann von der Gondel zum Fuß des Turmaufbaus mittels einer Gleichspannung. Die Gleichspannungsübertragung benötigt zwei Leiter, wovon der erste Leiter dieser Leiter durch die Metallkonstruktion des Turmaufbaus gebildet wird. In diesem Fall lassen sich aufgrund der benötigten zwei Leiter die Hälfte der Verkabelung einsparen, so dass diese Anordnung besonders kostengünstig und wirtschaftlich betreibbar ist. Damit der Gleichrichter und der Generator möglichst leicht und klein sind, um eine einfache Montage in der Gondel zu ermöglichen, hat sich der Betrieb der Energieübertragungsvorrichtung mit einer Spannung im Bereich von 800V bis 1500V als besonders vorteilhaft erwiesen. Für diesen Spannungsbereich ist der Aufbau des Generators einfach, auch sind Halbleiter für den Gleichrichter in diesem Spannungsbereich zuverlässig und kostengünstig am Markt verfügbar. Auf weitere Steller zur Anpassung der Gleichspannung kann in diesem Fall verzichtet werden. Als besonders vorteilhaft im Zusammenspiel aller in der Gondel angeordneter Komponenten hat sich eine Gleichspannung von 1100V herausgestellt, da diese Spannung auf einfache Weise aus einem Generator mit einer Nennspannung von 690V generierbar ist. Sowohl der Generator als auch der Gleichrichter kann in diesem Fall in einem Arbeitsbereich mit hohem Wirkungsgrad betrieben werden.

Im Folgenden wird die Erfindung anhand der in den Figuren dargestellten Ausführungsbeispiele näher beschrieben und erläutert. Es zeigen:
- FIG 1 bis FIG 3: Ausführungsbeispiele einer Windkraftanlage mit vorgeschlagener Energieübertragungsvorrichtung und
- FIG 4: ein Betonelement für den Aufbau einer vorgeschlagenen Windkraftanlage.

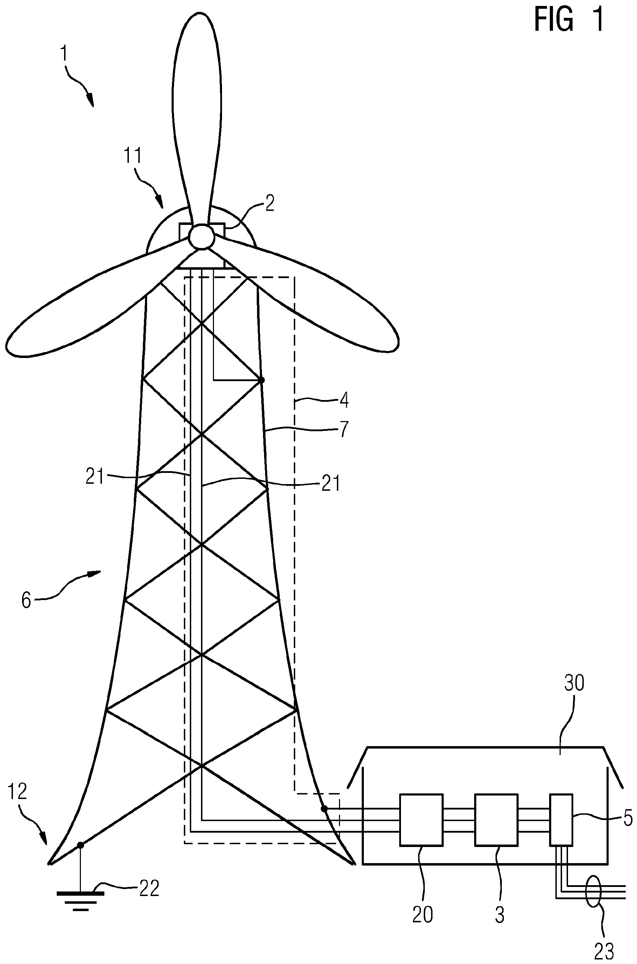

Die FIG 1 zeigt eine Windkraftanlage 1. Der Turmaufbau 6 dieser Windkraftanlage 1 ist als Stahlgitterturm ausgeführt. Die Gitterkonstruktion ist der Übersichtlichkeit halber deutlich vereinfacht dargestellt. Der Generator 2 befindet sich in der Gondel 11 der Windkraftanlage 1. Der Transformator 3, der Netzanschlusspunkt 5 und ein für die Regelung des Energieflusses vorhandener Frequenzumrichter 20 sind am Fuß 12 der Windkraftanlage 1 angeordnet. Da die Gitterkonstruktion des Stahlgitterturms eine offene Konstruktion ist, hat es sich als vorteilhaft erwiesen, die Komponenten wie beispielsweise den Transformator 3, den Netzanschlusspunkt 5 und/oder den Frequenzumrichter 20 am Fuß 12 wettergeschützt in einem Gebäude 30 anzuordnen.

Die Energieübertragung von der Gondel 11 zum Fuß 12 der Windkraftanlage 1 erfolgt über die Energieübertragungsvorrichtung 4. Diese umfasst drei Leiter. Dabei bildet die Metallkonstruktion 7 des Turmaufbaus 6 den ersten Leiter, um mit einem Strom durch die Metallkonstruktion 7 elektrische Energie zu übertragen. Die beiden übrigen Leiter werden durch Kabel 21 oder Stromschienen gebildet.

Die Metallkonstruktion 7 übernimmt dabei das Leiten des Stroms von der Gondel 11 zum Fuß der Windkraftanlage 1. In der Nähe des Generators 2 wird, beispielsweise mit Hilfe eines kurzen Kabels, eine elektrische Verbindung einer Phase des Generators 2 mit der Metallkonstruktion 7 geschaffen. Ebenso wird am Fuß 12 der Windkraftanlage 1 der Strom wieder der Metallkonstruktion 7 entnommen und dem Frequenzumrichter 20 und/oder dem Transformator 3 zugeführt.

Um den Berührschutz sicherzustellen, wird das Potential der Metallkonstruktion 7 in vorteilhafter Weise mittels einer Erdungsvorrichtung 22 mit dem Erdpotential verbunden. Somit geht von der Schaltung und der Windkraftanlage 1, insbesondere von der Energieübertragungsvorrichtung 4, keine Gefahr mehr aus.

Über den Frequenzumrichter 20 und dem Transformator 3 fließt die durch den Wind erzeugte elektrische Energie am Netzanschlusspunkt 5 in das Energieversorgungsnetz 23.

Dabei kann der Frequenzrichter 20 generatorseitig oder auf der Seite des Energieversorgungsnetzes 23 mit dem Transformator 3 verbunden sein. Vorteilhafterweise wird der Frequenzumrichter 20 auf der Niederspannungsseite des Transformators 3 angeordnet, da der Frequenzumrichter 20 dann kostengünstiger und kleiner ist.

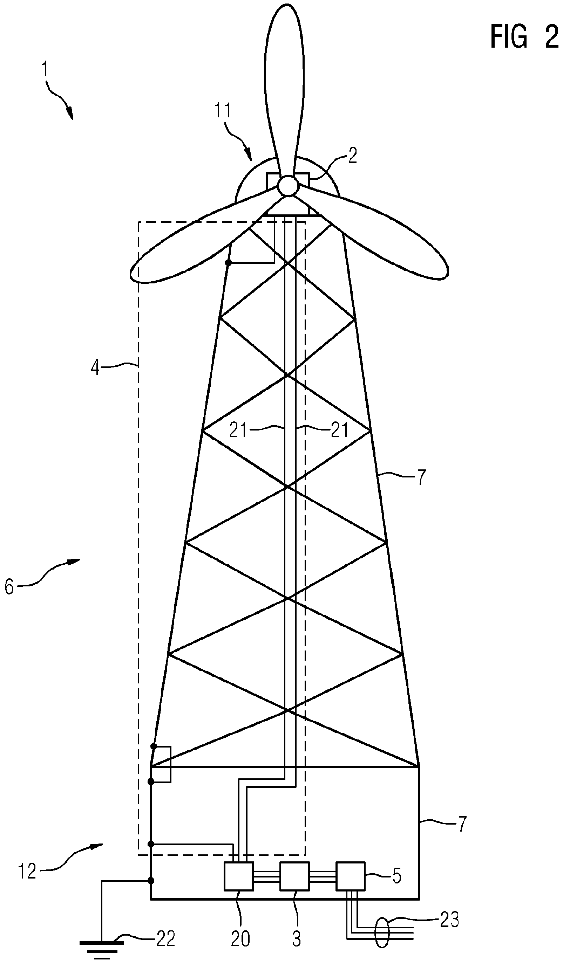

Die FIG 2 zeigt ein weiteres Beispiel einer Windkraftanlage 1. Zur Vermeidung von Wiederholungen wird auf die Beschreibung zur FIG 1 sowie auf die dort eingeführten Bezugszeichen verwiesen. Bei diesem Ausführungsbeispiel handelt es sich um eine Kombination des Turmaufbaus 6 aus einem Stahlgitterturm und einem Betonturm. Der untere Teil stellt einen Betonturm dar, in dem einige Komponenten, wie beispielsweise Frequenzumrichter 20, Transformator 3 und Netzanschlusspunkt 5 vor Umwelteinflüssen geschützt untergebracht sind. Daran schließt sich dann eine Gitterkonstruktion eines Stahlgitterturms an, die einfach und kostengünstig herstellbar ist. Dabei kann die Stromführung durch die Metallkonstruktion 7 des Stahlgitterturms und/oder durch die Metallkonstruktion 7 des Betonturms erfolgen. Die Metallkonstruktion 7 des Betonturms wird dabei durch die Bewehrung des Betonturms gebildet. An dem Übergang zwischen Stahlgitterturm und Betonturm wird der Strom beispielsweise mittels eines Kabels oder einer Stromschiene, insbesondere einer nichtisolierten Stromschiene von der Gitterkonstruktion zur Bewehrung des Betonturms übertragen.

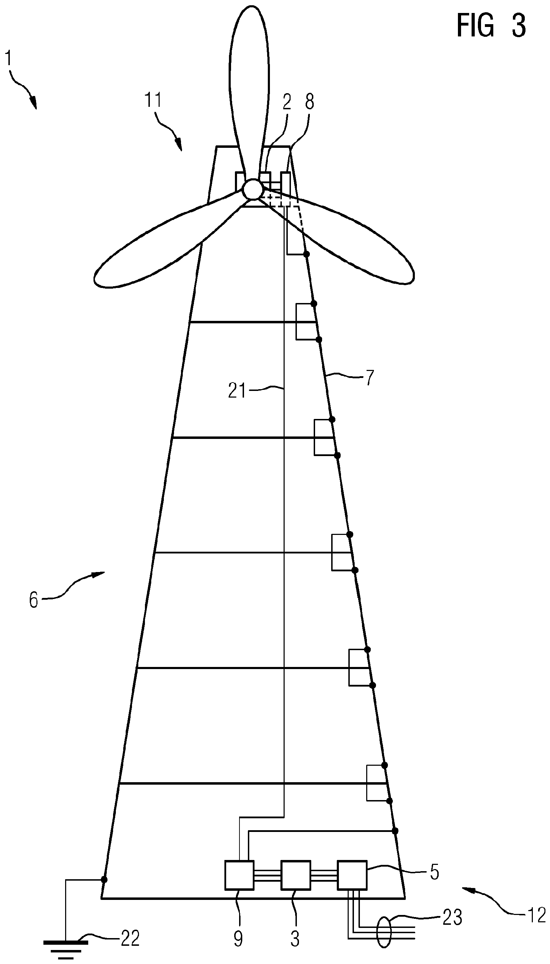

Ein weiteres Ausführungsbeispiel einer Windkraftanlage 1 zeigt FIG 3. Zur Vermeidung von Wiederholungen wird auf die Beschreibung zu den Figuren 1 und 2 sowie auf die dort eingeführten Bezugszeichen verwiesen. Dabei ist der Turmaufbau 6 als Betonturm ausgestaltet. Der Betonturm setzt sich dabei aus einer Vielzahl von Betonelementen zusammen. Jedes dieser Betonelemente weist durch die Bewehrung eine Metallkonstruktion 7 auf, die den Strom des ersten Leiters führt. In der Umgebung des Übergangs zwischen zwei Betonelementen wird eine Verbindung, beispielsweise in Form eines Anschlusses, zur Metallkonstruktion 7 in das Innere des Turmaufbaus 6 herausgeführt. Damit können die Metallkonstruktionen benachbarter Betonelemente beispielsweise mittels eines Kabels miteinander verbunden werden.

In der Gondel 11 ist in diesem Ausführungsbeispiel neben dem Generator 2 ein Gleichrichter 8 angeordnet, der die Wechselspannung und den Wechselstrom, die durch den Generator 2 erzeugt werden, in eine Gleichspannung und einen Gleichstrom umwandelt. Daher sind für die Übertragung der elektrischen Energie nur zwei Leiter erforderlich. Durch den Wegfall des Kabels für den ersten Leiter, da der erste Leiter durch die Metallkonstruktion 7 realisiert wird, kann bei diesem Ausführungsbeispiel etwa die Hälfte der Kabel entfallen. Der Strom wird dabei durch die Metallkonstruktion 7 der einzelnen Betonelemente abschnittsweise übertragen. An den Übergängen zwischen den Betonelementen kommt ein Leiter wie beispielsweise ein Kabel oder eine Stromschiene, insbesondere eine nichtisolierte Stromschiene, für die Übertragung des Stroms zum Einsatz. Bevor die elektrische Energie dem Transformator 3 zugeführt wird, wird sie mittels eines Wechselrichters 9 in eine Wechselspannung bzw. einen Wechselstrom umgewandelt.

Die Betonkonstruktion bietet sich neben der Energieübertragung mit einem Drehstromnetz im Besonderen auch für die Ausgestaltung der Energieübertragungsvorrichtung 4 mit einer Gleichspannung an, da dabei ein Gleichrichter 8 in der Gondel 11 der Windkraftanlage 1 angeordnet wird. Diese Anordnung kann durch den Betonturm geschützt erfolgen.

Ebenso ist es möglich, auch die Energieübertragungsvorrichtung mittels einer dreiphasigen Wechselspannung vorzunehmen wie in den Figuren 1 und 2 dargestellt. Auf der anderen Seite kann auch die Energieübertragungsvorrichtung 4 der Figuren 1 und 2 mit Hilfe einer Gleichspannung ausgeführt sein, wenn in der Gondel 11 ein Gleichrichter 8 und am Fuß 12 der Windkraftanlage 1 ein Wechselrichter 9 angeordnet ist.

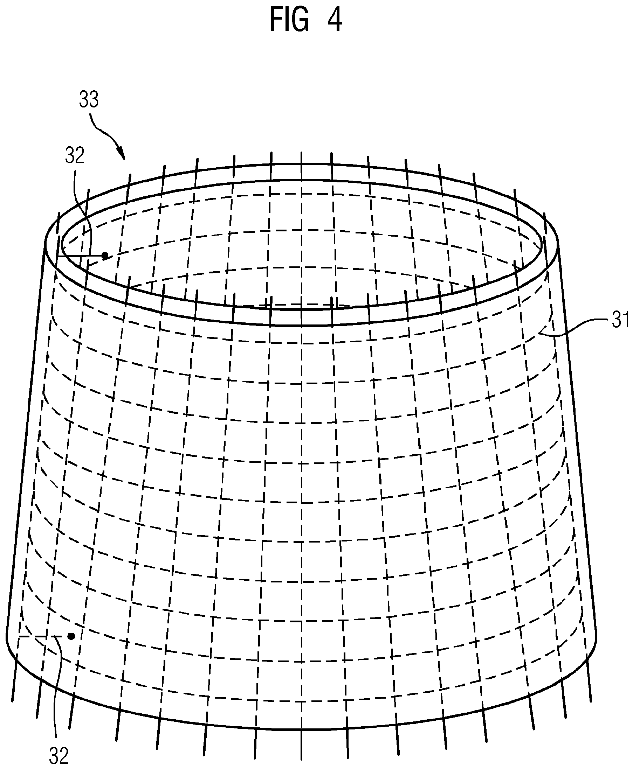

Die FIG 4 zeigt ein Betonelement 33. Mit einer Vielzahl von Betonelementen 33 wird aufeinandergestapelt ein Turmaufbau 6 eines Betonturms realisiert. Die im Betonelement 33 vorhandene Bewehrung ist gestrichelt dargestellt, da sie im Innern des Betons angeordnet ist. Die Bewehrung ist dabei in diesem Ausführungsbeispiel als Bewehrungsgitter 31 ausgebildet. Alternativ oder ergänzend zur Ausgestaltung als Bewehrungsgitter 31 ist es möglich, die Bewehrung auch in Form von Stäben auszuführen. Die Bewehrung bildet die Metallkonstruktion 7 des Turmaufbaus 6. Der Strom fließt im Turmaufbau 6 abschnittsweise durch das Bewehrungsgitter 31. Über die Anschlüsse 32 kann mit Hilfe von Kabeln oder Stromschienen die Verbindung zum Bewehrungsgitter 31 des jeweils benachbarten Betonelements 33 hergestellt werden. Die Anschlüsse 32 sind dazu leitend mit der Bewehrung verbunden. Zur niederohmigen Verbindung der Bewehrungsgitter 31, d.h. der Metallkonstruktionen 7, benachbarter Betonelemente 33 können auch mehrere Anschlüsse 32 vorhanden sein, um die Verbindung mittels mehrerer elektrisch parallel angeordneter Kabel mit geringem elektrischen Widerstand zu realisieren.

Zusammenfassend betrifft die Erfindung eine Windkraftanlage, aufweisend einen Generator, einen Transformator, eine Energieübertragungsvorrichtung zur Übertragung einer vom Generator erzeugten elektrischen Energie, einen Netzanschlusspunkt und einen Turmaufbau, wobei sich die Energieübertragungsvorrichtung von der Gondel zum Fuß der Windkraftanlage erstreckt und den Generator elektrisch über den Transformator mit dem Netzanschlusspunkt verbindet. Zur Verbesserung des Windkraftanlage wird vorgeschlagen, dass die Energieübertragungsvorrichtung als einen ersten Leiter eine Metallkonstruktion des Turmaufbaus umfasst, wobei die Metallkonstruktion zumindest abschnittsweise als eine elektrisch leitende Verbindung von der Gondel zum Fuß der Windkraftanlage ausgebildet ist, wobei der Transformator am Fuß der Windkraftanlage angeordnet ist, wobei der Transformator die Energieübertragungsvorrichtung und den Netzanschlusspunkt elektrisch leitend und galvanisch getrennt miteinander verbindet, wobei die Metallkonstruktion mit einem vorgegebenen Bezugspotential, insbesondere mit dem Erdpotential, elektrisch leitend verbunden ist. Ferner betrifft die Erfindung ein Verfahren zum Betreiben einer derartigen Windkraftanlage, wobei ein Strom zum Übertragen von durch den Generator erzeugter, elektrischer Energie von der Gondel zum Fuß der Windkraftanlage zumindest abschnittsweise und/oder teilweise durch die Metallkonstruktion des Turmaufbaus geleitet wird.

## Patentansprüche

1. Windkraftanlage (1), aufweisend
- einen Generator (2),
- einen Transformator (3),
- eine Energieübertragungsvorrichtung (4) zur Übertragung einer vom Generator (2) erzeugten elektrischen Energie mittels eines Drehstromnetzes oder mittels einer Gleichspannung eines Gleichspannungsnetzes,
- einen Netzanschlusspunkt (5) und
- einen Turmaufbau (6)
wobei sich die Energieübertragungsvorrichtung (4) von der Gondel (11) zum Fuß (12) der Windkraftanlage (1) erstreckt und den Generator (2) elektrisch über den Transformator (3) mit dem Netzanschlusspunkt (5) verbindet, wobei die Energieübertragungsvorrichtung (4) als einen ersten Leiter eine Metallkonstruktion (7) des Turmaufbaus (6) derart umfasst, dass die Metallkonstruktion (7) für eine Phase des Drehstromnetzes oder für ein Potential des Gleichspannungsnetzes zum Leiten des Stroms für die Energieversorgung genutzt wird, wobei die Metallkonstruktion (7) zumindest abschnittsweise als eine elektrisch leitende Verbindung von der Gondel (11) zum Fuß (12) der Windkraftanlage (1) ausgebildet ist, wobei der Transformator (3) am Fuß (12) der Windkraftanlage (1) angeordnet ist, wobei der Transformator (3) die Energieübertragungsvorrichtung (4) und den Netzanschlusspunkt (5) elektrisch leitend und galvanisch getrennt miteinander verbindet, wobei die Metallkonstruktion (7) mit einem vorgegebenen Bezugspotential, insbesondere mit dem Erdpotential, elektrisch leitend verbunden ist.

2. Windkraftanlage (1) nach Anspruch 1, wobei die Windkraftanlage (1) eingerichtet ist, einen Strom zum Übertragen von durch den Generator (2) erzeugter, elektrischer Energie von der Gondel (11) zum Fuß (12) der Windkraftanlage (1) zumindest abschnittsweise und/oder teilweise durch die Metallkonstruktion (7) des Turmaufbaus (6) zu leiten.

3. Windkraftanlage (1) nach einem der Ansprüche 1 oder 2, wobei die Metallkonstruktion (7) des Turmaufbaus (6) zumindest teilweise durch einen Stahlgitterturm gebildet wird.

4. Windkraftanlage (1) nach einem der Ansprüche 1 bis 3, wobei der Turmaufbau zumindest teilweise als ein Betonturm ausgebildet ist, wobei die Metallkonstruktion (7) des Turmaufbaus (6) zumindest abschnittsweise durch eine Bewehrung oder Teile der Bewehrung des Betonturmes gebildet wird.

5. Windkraftanlage (1) nach einem der Ansprüche 1 bis 4, wobei die Höhe des Turmaufbaus mindestens 100m beträgt.

6. Windkraftanlage (1) nach einem der Ansprüche 1 bis 5, wobei die Energieübertragungsvorrichtung (4) für den Betrieb mit einer dreiphasigen Wechselspannung im Niederspannungsbereich, insbesondere mit einer Nennspannung von 690V, eingerichtet ist.

7. Windkraftanlage (1) nach einem der Ansprüche 1 bis 5, wobei zwischen Generator (2) und der Energieübertragungsvorrichtung (4) ein Gleichrichter (8) angeordnet ist, wobei zwischen der Energieübertragungsvorrichtung (4) und dem Transformator ein Wechselrichter (9) angeordnet ist, wobei die Energieübertragungsvorrichtung (4) für den Betrieb mit einer Gleichspannung, insbesondere im Spannungsbereich von 800V bis 1500V, eingerichtet ist.

8. Verfahren zum Betreiben einer Windkraftanlage (1) nach einem der Ansprüche 1 bis 7, wobei ein Strom zum Übertragen von durch den Generator (2) erzeugter, elektrischer Energie von der Gondel (11) zum Fuß (12) der Windkraftanlage (1) zumindest abschnittsweise und/oder teilweise durch die Metallkonstruktion (7) des Turmaufbaus (6) geleitet wird, wobei die Metallkonstruktion (7) für eine Phase des Drehstromnetzes oder für ein Potential des Gleichspannungsnetzes zum Leiten des Stroms für die Energieversorgung genutzt wird.

## Claims

1. Wind turbine (1), having
- a generator (2),
- a transformer (3),
- an energy transfer apparatus (4) for transferring electrical energy generated by the generator (2) by means of a three-phase network or by means of a DC voltage of a DC voltage network,
- a network connection point (5) and
- a tower structure (6)
wherein the energy transfer apparatus (4) extends from the nacelle (11) to the base (12) of the wind turbine (1) and electrically connects the generator (2) to the network connection point (5) via the transformer (3), wherein the energy transfer apparatus (4) comprises, as a first conductor, a metal construction (7) of the tower structure (6) in such a manner that the metal construction (7) is used for a phase of the three-phase network or for a potential of the DC voltage network for conducting the current for the energy supply, wherein the metal construction (7), at least in sections, is embodied as an electrically conductive connection from the nacelle (11) to the base (12) of the wind turbine (1), wherein the transformer (3) is arranged at the base (12) of the wind turbine (1), wherein the transformer (3) interconnects the energy transfer apparatus (4) and the network connection point (5) in an electrically conductive and galvanically isolated manner, wherein the metal construction (7) is connected to a predefined reference potential, in particular to the earth potential, in an electrically conductive manner.

2. Wind turbine (1) according to claim 1, wherein the wind turbine (1) is configured to conduct a current for transferring electrical energy, which is generated by the generator (2), from the nacelle (11) to the base (12) of the wind turbine (1), at least in sections and/or partially through the metal construction (7) of the tower structure (6).

3. Wind turbine (1) according to one of claims 1 or 2, wherein the metal construction (7) of the tower structure (6) is formed at least partially by a steel frame tower.

4. Wind turbine (1) according to one of claims 1 to 3, wherein the tower structure is formed at least partially as a concrete tower, wherein the metal construction (7) of the tower structure (6) is formed at least partially by a reinforcement or parts of a reinforcement of the concrete tower.

5. Wind turbine (1) according to one of claims 1 to 4, wherein the height of the tower structure amounts to at least 100m.

6. Wind turbine (1) according to one of claims 1 to 5, wherein the energy transfer apparatus (4) is configured for operation at a three-phase AC voltage in the low voltage range, in particular at a rated voltage of 690V.

7. Wind turbine (1) according to one of claims 1 to 5, wherein a rectifier (8) is arranged between generator (2) and the energy transfer apparatus (4), wherein an inverter (9) is arranged between the energy transfer apparatus (4) and the transformer, wherein the energy transfer apparatus (4) is configured for operation at a DC voltage, in particular in the voltage range from 800V to 1500V.

8. Method for operating a wind turbine (1) according to one of claims 1 to 7, wherein a current for transferring electrical energy, which is generated by the generator (2), from the nacelle (11) to the base (12) of the wind turbine (1), is conducted at least in sections and/or partially through the metal construction (7) of the tower structure (6), wherein the metal construction (7) is used for a phase of the three-phase network or for a potential of the DC voltage network for conducting the current for the energy supply.

## Revendications

1. Eolienne (1), comportant
- un générateur (2),
- un transformateur (3),
- une installation (4) de transport d'énergie pour le transport d'une énergie électrique produite par le générateur (2) au moyen d'un réseau triphasé ou au moyen d'une tension continue d'un réseau en tension continue,
- un point (5) de connexion au réseau et
- une érection (6) de tour,
dans laquelle l'installation (4) de transport d'énergie s'étend de la nacelle (11) au pied (12) de l'éolienne (1) et relie le générateur (2) au point (5) de connexion au réseau électriquement par le transformateur (3), dans laquelle l'installation (4) de transport d'énergie comprend, comme premier conducteur, une construction (7) métallique de l'érection (6) de tour, de manière à utiliser la construction (7) métallique pour une phase du réseau triphasé ou pour un potentiel du réseau en tension continue pour la conduite du courant pour l'alimentation en énergie, dans laquelle la construction (7) métallique est constituée au moins par endroits sous la forme d'une liaison conductrice de l'électricité de la nacelle (11) au pied (12) de l'éolienne (1), dans laquelle le transformateur (3) est monté au pied (12) de l'éolienne (1), dans laquelle le transformateur (3) relie entre eux, d'une manière conductrice et séparée galvaniquement, l'installation (4) de transport d'énergie et le point (5) de raccordement au réseau, dans laquelle la construction (7) métallique est reliée d'une manière conductrice de l'électricité à un potentiel de référence donné à l'avance, en particulier au potentiel de terre.

2. Eolienne (1) suivant la revendication 1, dans laquelle l'éolienne (1) est agencée pour conduire un courant de transport d'énergie électrique produit par le générateur (2) de la nacelle (11) au pied (12) de l'éolienne (1) au moins par endroits et/ou en partie par la construction (7) métallique de l'érection (6) de tour.

3. Eolienne (1) suivant la revendication 1 ou 2, dans laquelle la construction (7) métallique de l'érection (6) de tour est formée au moins en partie par une tour en grillage d'acier.

4. Eolienne (1) suivant l'une des revendications 1 à 3, dans laquelle l'érection de tour est constituée au moins en partie sous la forme d'une tour en béton, dans laquelle la construction (7) métallique de l'érection (6) de tour est formée au moins en partie par une armature ou des parties de l'armature de la tour en béton.

5. Eolienne (1) suivant l'une des revendications 1 à 4, dans laquelle la hauteur de l'érection de tour est d'au moins 100 m.

6. Eolienne (1) suivant l'une des revendications 1 à 5, dans laquelle l'installation (4) de transport d'énergie est agencée pour le fonctionnement à une tension alternative triphasée dans le domaine de la basse tension, en particulier à une tension nominale de 690 V.

7. Eolienne (1) suivant l'une des revendications 1 à 5, dans laquelle un redresseur (8) est monté entre le générateur (2) et l'installation (4) de transport d'énergie, dans laquelle un onduleur (9) est monté entre l'installation (4) de transport d'énergie et le transformateur, dans laquelle l'installation (4) de transport d'énergie est agencée pour le fonctionnement à une tension continue, en particulier dans le domaine de tension de 800 V à 1500 V.

8. Procédé pour faire fonctionner une éolienne (1) suivant l'une des revendications 1 à 7, dans lequel on envoie un courant pour le transport d'énergie électrique produite par le générateur (2) de la nacelle (11) au pied (12) de l'éolienne (1) au moins par endroits et/ou en partie par la construction (7) métallique de l'érection (6) de tour, dans lequel on utilise la construction (7) métallique pour une phase du réseau triphasé ou pour un potentiel du réseau en tension continue pour conduire le courant pour l'alimentation en énergie.
